# EUROPEAN PATENT APPLICATION

(11) **EP 4 506 082 A1**
(43) Date of publication of application: **12.02.2025**
(21) Application number: 23784509.4
(22) Date of filing: 30.01.2023
(51) Int. Cl.: B21D 28/26

(54) **BOTTOMED CAN MANUFACTURING METHOD AND INTERMEDIATE MATERIAL FOR BOTTOMED CAN MANUFACTURING**

(30) Priority: 08.04.2022 JP 2022064334
(71) Applicant: Toyo Seikan Co., Ltd., Tokyo 141-8640 (JP)
(72) Inventor: OOHORI, Kei, Yokohama-shi, Kanagawa 230-0001 (JP); ISHIGURO, Hideki, Yokohama-shi, Kanagawa 230-0001 (JP); OSAFUNE, Tatsuya, Yokohama-shi, Kanagawa 230-0001 (JP); NAKAGAWA, Takanori, Yokohama-shi, Kanagawa 230-0001 (JP)
(74) Representative: dompatent von Kreisler Selting Werner - Partnerschaft von Patent- und Rechtsanwälten mbB
(86) International application number: PCT/JP2023/002831
(87) International publication number: WO 2023/195214

(57) **Abstract**

Provided are a method for manufacturing bottomed cans and an intermediate material for manufacturing bottomed cans capable of obtaining high quality bottomed cans with high accuracy in positioning and suppression of distortion and warpage while making a desired portion of a blank thinner, and reducing an amount of scrap to be discarded. A method for manufacturing multiple bottomed cans (10) from a metal raw plate (20) includes a coining step of coining at least part of an area (30) to be blank that becomes a blank (33) in the raw plate, after the coining step, a forming step of punching a blank from the raw plate and drawing the obtained blank into a bottomed can shape, and before the coining step, a buffering hole forming step of piercing a material flow buffering hole (25) between the areas to be blank in the raw plate.

## Description

### Technical Field

The present invention relates to a method for manufacturing bottomed cans formed by drawing, or drawing and ironing, and an intermediate material for manufacturing bottomed cans.

### Background Art

As a method for manufacturing metal bottomed cans, a method is commonly known in which a blank punched from a raw plate is drawn or drawn and ironed. In such a method, the raw plate, the blank, or the like is recessed by pressing (coining) to form a thin portion. Reasons for this include, for example, the following. For the purpose of reducing an ironing rate of a cylindrical side wall portion to suppress body burst, an area corresponding to the side wall portion to be drawn and ironed is thinned by coining in advance. A cylindrical side wall portion is made thinner by being ironed, but a thickness of a bottom portion depends on a thickness of a raw plate because the bottom portion is hardly processed, and as a result, the bottom portion is thicker than the side wall portion. Thus, an area to be blank in a blank or an intermediate formed body that becomes the bottom portion of the bottomed can is thinned in advance by coining.

For example, Patent Document 1 discloses a method for forming a bottomed can by pressing a blank to form a bottomed cylindrical intermediate formed product, coining a central portion of a bottom portion of the intermediate formed product, and then drawing or drawing and ironing. Patent Document 2 discloses a method for coining in advance an area corresponding to a side wall portion to be drawn and ironed for the purpose of reducing an ironing rate of the side wall portion by drawing and ironing to suppress body burst.

The above bottomed cans can be manufactured, for example, by arranging dies required for steps (coining, punching, drawing, and drawing and ironing the blank) in order of the steps along a conveyance path and sequentially subjecting a strip-shaped raw plate to these steps by intermittent conveyance. According to this manufacturing method, multiple bottomed cans can be continuously manufactured from one strip-shaped raw plate.

On the other hand, coining can be applied to a strip-shaped raw plate, a punched blank, and an intermediate formed product drawn to some extent. However, when coining is performed before punching the blank, that is, when coining the strip-shaped raw plate, there is a problem that the material is extruded during the coining, causing distortion and warpage in the raw plate, which interferes with positioning or the like during the subsequent punching of the blank. In addition, in order to prevent the distortion from spreading to adjacent areas to be blank even when distortion occurs in the strip-shaped raw plate due to coining, it is necessary to ensure a large distance between the areas to be blank, which results in an increase in an amount of scrap to be discarded and low productivity.

### Citation List

### Patent Literature

Patent Document 1: JP 4702843 B
Patent Document 2: JP 6776768 B

### Summary of Invention

### Technical Problem

The present invention is to solve the above-described problems, and provides a method for manufacturing bottomed cans and an intermediate material for manufacturing bottomed cans that can obtain high quality bottomed cans with high positioning accuracy and reduced distortion and warpage while making a desired portion of a blank thinner, and reduce an amount of scrap to be discarded.

### Solution to Problem

A method for manufacturing bottomed cans according to the present invention is a method for manufacturing multiple bottomed cans from a raw plate made of metal, the method includes coining at least part of an area to be blank that becomes a blank in the raw plate, punching and obtaining a blank from the raw plate and drawing and forming the blank obtained into a bottomed can shape, sequentially in this order, and before the coining, piercing a material flow buffering hole to form a buffering hole between the area to be blank and another area to be blank in the raw plate. Through these steps, the above problems are solved.

An intermediate material for manufacturing bottomed cans according to the present invention is an intermediate material for manufacturing bottomed cans made of metal from which blanks for manufacturing a plurality of bottomed cans are punched, in which a material flow buffering hole is provided between areas to be blank in the intermediate material for manufacturing bottomed cans.

### Advantageous Effects of Invention

With the method for manufacturing bottomed cans and the intermediate material for manufacturing bottomed cans according to the present invention, coining basically allows the blank to be thinner in a desired portion. In addition, the material flow buffering hole is pierced between the areas to be blank to prevent distortion from spreading to the adjacent areas to be blank due to outward expansion of the material extruded by coining. Therefore, a distance between the areas to be blank does not need to be large enough to prevent distortion from spreading, and as a result, an amount of scrap to be discarded can be reduced and high productivity can be achieved. Further, the material flow buffering hole is pierced between the areas to be blank in the raw plate, and the material flow buffering hole serves as an expansion destination of the material pushed out from the area to be blank due to coining to prevent change of positions of the areas to be blank before and after coining. Therefore, in the subsequent punching of the blank, positioning of the conveyed strip-shaped raw plate is more accurate, and the area can be punched precisely, resulting in high-quality bottomed cans with reduced distortion and warpage.

Further, with the method of manufacturing bottomed cans and the intermediate material for manufacturing bottomed cans having a positioning portion according to the present invention, the material flow buffering hole is pierced between the areas to be blank and the positioning hole, and the material flow buffering hole serves as an expansion destination of the material pushed out from the area to be blank due to coining to prevent change of a position of the positioning hole relative to the areas to be blank before and after coining. Therefore, in the subsequent punching of the blank, positioning of the conveyed strip-shaped raw plate is more accurate, and the area to be blank can be punched precisely, resulting in high-quality bottomed cans with reduced distortion and warpage.

### Brief Description of Drawings

FIG. 1 is a plan view illustrating a strip-shaped raw plate that is being processed in a method for manufacturing bottomed cans according to an embodiment of the present invention.
FIG. 2 is a perspective view illustrating a first intermediate formed product drawn and ironed according to the embodiment of the present invention.
FIG. 3 is a perspective view illustrating a second intermediate formed product drawn and ironed according to the embodiment of the present invention.
FIG. 4 is a perspective view illustrating an example of a bottomed can obtained by the method for manufacturing bottomed cans according to the present invention.
FIG. 5 is an explanatory cross-sectional view illustrating an example of a machine used for coining, illustrating a state of a recessed portion before being pressed.
FIG. 6 is an explanatory cross-sectional view illustrating a state of the recessed portion after being pressed by the coining machine in FIG. 5.
FIG. 7 is a plan view illustrating an example of an intermediate material for manufacturing bottomed cans according to the present invention.

### Description of Embodiments

A method for manufacturing bottomed cans and an intermediate material for manufacturing bottomed cans according to an embodiment of the present invention will be described below with reference to the drawings.

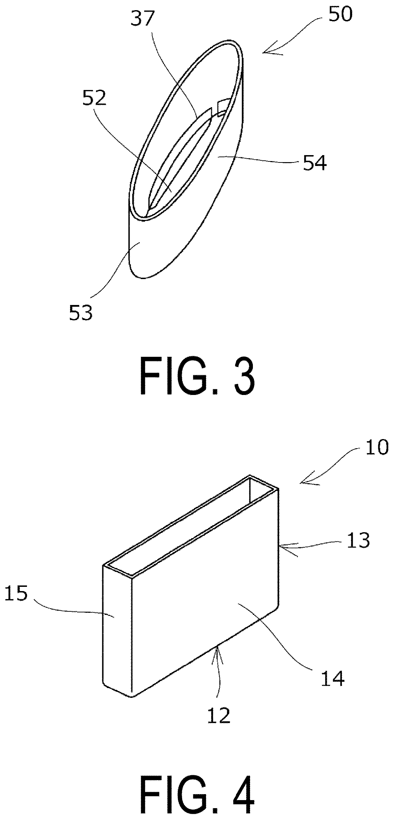

A bottomed can 10 manufactured by the method for manufacturing bottomed cans according to the present invention is a rectangular can used as, for example, a casing for a battery or the like. As illustrated in FIG. 4, the bottomed can 10 includes a substantially rectangular bottom portion 12 having a pair of long sides and a pair of short sides in plan view, and a side wall portion 13 having a rectangular cylindrical shape with a rectangular horizontal cross section, which is integrally formed to surround the bottom portion 12 and stand upright, and an upper end of the side wall portion 13 is open. The side wall portion 13 includes a pair of long side portions 14 with the long sides of the bottom portion 12 as lower sides, and a pair of short side portions 15 with the short sides of the bottom portion 12 as lower sides.

### Method for Manufacturing Bottomed Cans

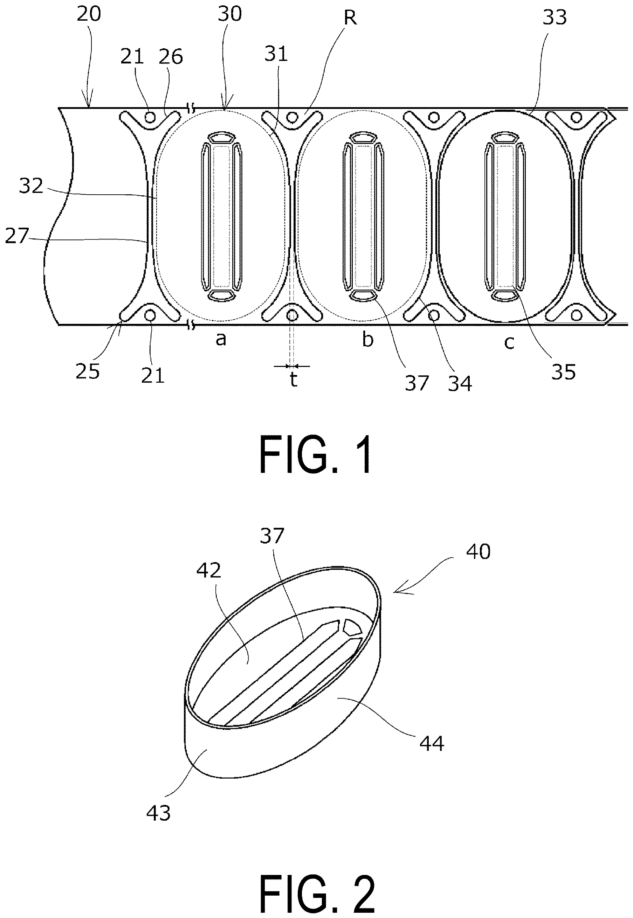

FIG. 1 is a plan view illustrating a strip-shaped raw plate that is being processed in a method for manufacturing bottomed cans according to the embodiment of the present invention.

Multiple bottomed cans 10 are continuously manufactured from a strip-shaped metal raw plate (hereinafter also referred to as "strip raw plate") 20 fed from a metal coil. To be specific, the method for manufacturing the bottomed cans 10 according to the embodiment of the present invention is a progressive processing method in which a piercing step of piercing positioning holes 21 and a material flow buffering hole 25 in the strip raw plate 20, a coining step of coining at least part of an area 30 to be blank on the strip raw plate 20 (part a in FIG. 1), and a forming step of punching to separate a blank 33 having a predetermined shape from the strip raw plate 20 (part c in FIG. 1) and drawing and/or drawing and ironing the obtained blank 33 into a bottomed can shape are performed in this order. Note that part b in FIG. 1 illustrates an idle state in which no processing is performed.

Dies required for the respective steps are arranged in order of the steps along a conveyance path for the strip raw plate 20, and the strip raw plate 20 is processed in the respective steps while being intermittently conveyed.

In the present embodiment, positioning portions used for positioning in the forming step is composed of the positioning holes 21 passing through the strip raw plate 20, but the positioning portions in the present invention are not limited to the through holes, and may be recessed portions having a different thickness, and the recessed portions include scratches, forming marks, and the like. Such recessed portions can be used for positioning the area to be blank by detecting positions thereof using, for example, a camera or the like.

For example, an aluminum plate can be used as the strip raw plate 20, but the strip raw plate 20 is not limited to the aluminum plate, and other metal materials can also be used.

The area 30 to be blank is an area that becomes the blank 33 by later punching. In FIG. 1, the area 30 to be blank is indicated by a broken line. The area 30 to be blank has an elliptical shape elongated in a width direction of the strip raw plate 20 (vertical direction in FIG. 1). That is, elliptical top portions 31 of the area 30 to be blank are positioned close to both edges of the strip raw plate 20, and a body portion 32 is positioned in the center. In the strip raw plate 20, multiple areas 30 to be blank are arranged in a line in a conveyance direction (right-left direction in FIG. 1).

In this specification, an elliptical shape is a shape that has a major axis and a minor axis, in which a periphery on a minor axis side is a curved line and a periphery on a major axis side is a straight line or a curved line, and includes, for example, an oval shape, an elliptical shape, an egg shape, and a rounded rectangular shape.

A specific shape of the area to be blank is determined according to a shape of a bottomed to be manufactured, and is not limited to the elliptical shape described above, and may be any other shape.

In the piercing step, the positioning holes 21 and the material flow buffering hole 25 are pierced simultaneously. As a specific piercing method, various known methods can be adopted as long as the method is capable of punching the strip raw plate 20 into a predetermined shape.

In the present embodiment, the positioning holes 21 and the material flow buffering hole 25 are formed simultaneously in the piercing step, but the present invention is not limited to this, and a positioning portion forming step of piercing the positioning holes 21 and a buffering hole forming step of piercing the material flow buffering hole 25 may be performed separately. In this case, the order in which the positioning portion forming step and the buffering hole forming step are performed does not matter.

The positioning holes 21 are pierced at positions outside the areas 30 to be blank and close to both edges of both end portions (upper end portion and lower end portion in FIG. 1) of the strip raw plate 20 in the width direction within substantially V-shaped areas R formed between the elliptical top portions 31 of the adjacent areas 30 to be blank, respectively. In particular, it is preferable that the positioning holes 21 be formed at positions equidistant from the adjacent areas 30 to be blank within the substantially V-shaped areas R. A pair of positioning holes 21 facing each other in the width direction are positioned on the same line perpendicular to the conveyance direction.

By forming the positioning holes 21 at the above-described positions, the material flow buffering hole 25, which will be described later in detail, can be formed so as to ensure a large area in which an effect of the material flow buffering hole 25 is sufficiently exhibited.

The material flow buffering hole 25 is a buffering hole for absorbing elongation of the material of the strip raw plate 20 during the coining step, so that a portion expanded in the material flow buffering hole 25 does not affect other portions. In the present embodiment, the material flow buffering hole 25 functions so that a distance between the adjacent areas 30 to be blank and distances between the adjacent positioning holes 21 and the areas 30 to be blank are not changed before and after coining.

The material flow buffering hole 25 is pierced between the areas 30 to be blank and between the positioning holes 21 and the areas 30 to be blank at a position that does not interfere with the areas 30 to be blank on the right and left sides and the positioning holes 21 on the upper and lower sides. In other words, the positioning holes 21 are positioned outside the areas 30 to be blank in the strip raw plate 20, such that the material flow buffering hole 25 is interposed between the positioning holes 21 and the areas 30 to be blank. The material flow buffering hole 25 is formed in a shape that follows the areas 30 to be blank and the positioning holes 21. To be specific, the material flow buffering hole 25 has a substantially X-shape including V-shaped portions 26 that lie between the areas 30 to be blank and the positioning holes 21 and open outward in the width direction so as to surround half of the positioning holes 21, and an I-shaped portion 27 that lies between the areas 30 to be blank and connects both V-shaped portions 26. The entire positioning hole 21 is located within a triangular area surrounded by a straight line connecting apexes of the V-shaped portion 26 and the V-shaped portion 26. The area 30 to be blank is surrounded by the material flow buffering holes 25 except for both end portions of the elliptical top portions 31 in the width direction.

The material flow buffering hole 25 is not in direct contact with the areas 30 to be blank, and edge portions having slight widths are interposed between the material flow buffering hole 25 and the areas 30 to be blank. That is, a blank portion 34 having a shape slightly larger than the area 30 to be blank in which an entire periphery of the area 30 to be blank is surrounded by the edge portion is placed in a state in which only the end portions in the width direction are integrally continuous with the strip raw plate 20 and a portion corresponding to the body portion 32 is separated from an adjacent blank portion 34.

Note that the shape of the material flow buffering hole 25 is not limited to the above-mentioned X-shape, but may be a rectangle or an ellipse extending in the width direction of the strip raw plate 20 (a major axis direction of the area 30 to be blank), a C-shape along the periphery of the major axis side of the area 30 to be blank, a Y-shape comprising one of the above V-shaped portions and the I-shaped portion, or a substantially I-shape in which a rectangle is constricted at the center in the width direction along the peripheries of the areas 30 to be blank on the major axis side and widens at both ends. Further, any other shape may be used as long as the shape can function as the material flow buffering hole. Among these, the shape of the material flow buffering hole 25 is preferably an X-shape, a C-shape, a Y-shape, or an I-shape, and more preferably an X-shape or an I-shape.

A minimum width t of the material flow buffering hole 25 is set based on an amount of extension of the strip raw plate 20 after coining, that is, a volume of a recessed portion 37 to be formed by coining, so the minimum width t varies depending on a depth of the recessed portion 37 formed by coining and a shape of the recessed portion 37 to be coined, that is, the minimum width t varies for each specific item for which the bottomed can 10 is used. For example, when a thickness of coining in the shape of the recessed portion 37 illustrated in FIG. 1 (a depth of the recessed portion 37) is 0.2 to 0.7 mm, the minimum width t of the material flow buffering hole 25 is 1 to 10 mm. When the minimum width t of the material flow buffering hole 25 is too small, the expansion of the strip raw plate 20 due to coining may affect the adjacent areas 30 to be blank and the positioning holes 21, causing change of the positional relationship and distortion of the strip raw plate 20. On the other hand, when the minimum width t of the material flow buffering hole 25 is too large, a yield may be low, leading to an increase in an amount of scrap to be discarded and a decrease in productivity.

The minimum width t of the material flow buffering hole 25 is a smaller one of a minimum distance between the adjacent areas 30 to be blank and a minimum distance between the area 30 to be blank and the positioning hole 21.

In the coining step, at least part of the area 30 to be blank in the strip raw plate 20 is coined to form the recessed portion 37. The recessed portion 37 is made thinner than an original plate thickness of the strip raw plate 20. In the present embodiment, the recessed portion 37 is coined along an outer peripheral edge of an area 35 to be bottom that becomes the bottom portion 12 of the bottomed can 10. The recessed portion 37 formed by coining has a planar shape, with an annular area around the periphery of the area 35 to be bottom divided into four parts corresponding to a pair of long sides and a pair of short sides of the area 35 to be bottom. The area to be coined is not limited to such a position and a shape, and can be appropriately designed depending on the purpose of coining or the like. For example, a recessed portion may be formed in the area 35 to be bottom for the purpose of making the area 35 to be bottom thinner. In FIG. 1, the area 35 to be bottom that becomes the bottom portion 12 of the bottomed can 10 as a final formed product is indicated by a dotted line.

In coining, material in the recessed portion 37 flows in a peripheral direction of the body portion 32 and the elliptical top portions 31, expands inward of the material flow buffering holes 25, and deforms to partially fill the material flow buffering holes 25. The flow of the material of the strip raw plate 20 is absorbed by the deformation of the material flow buffering holes 25, and does not affect an area 30 to be blank adjacent to an upstream side that has been already coined and an area 30 to be blank adjacent to a downstream side that has not yet been coined, preventing the change in their relative positions.

By coining the strip-shaped raw plate 20 before punching the blank, operating strokes of coining punches 61 and a metal plate holding member 63 can be shortened compared to coining the bottomed cylindrical intermediate formed body after drawing, allowing easy and efficient coining. In particular, by coining the strip-shaped raw plate 20 before punching the blank, the progressive process can be performed in one press machine, resulting in higher press speed and higher productivity.

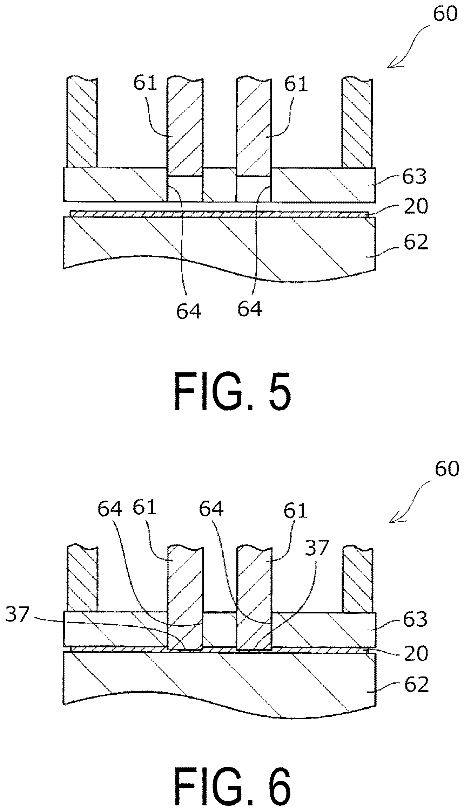

Various types of known coining machines can be used for coining. For example, as illustrated in FIGS. 5 and 6, a coining machine 60 includes the pair of coining punches 61, a coining die 62, and the metal plate holding member 63. The metal plate holding member 63 is provided with a pair of through holes 64 through which the coining punches 61 pass. The strip raw plate 20 is coined by the coining machine 60 configured in this way. The strip raw plate 20 is pressed by the coining punches 61 while being placed on the coining die 62. Thus, part of the strip raw plate 20 is compressed and plastically deformed by the coining punches 61 and the coining die 62, and the recessed portion 37 is formed. The planar shape of the recessed portion 37 is the same as the shape of tip end surfaces of the coining punches 61. Note that even when the strip raw plate 20 is held by the metal plate holding member 63, material flow due to coining occurs.

In the forming step, the strip raw plate 20 being positioned by the positioning holes 21 using, for example, pilot pins, is formed into a rectangular can shape by drawing or drawing and ironing. In part c in FIG. 1, only the punching line of the blank 33 is illustrated, but in the present embodiment, punching and drawing is performed in which the blank 33 is punched and then drawn in one stroke. In the forming step, punching and drawing of the blank 33 may be performed separately, or multiple stages of drawing and drawing and ironing may be performed in combination.

In the present embodiment, first, the blank 33 is punched and drawn simultaneously by punching and drawing, thereby forming a first intermediate formed body 40 including an elliptical bottom portion 42, side wall portions 43 including portions of the bottom portion 42 having a small radius of curvature, and side wall portions 44 including portions of the bottom portion 42 having a large radius of curvature, as illustrated in FIG. 2. Subsequently, the first intermediate formed body 40 is drawn or drawn and ironed to form a second intermediate formed body 50 including an elliptical bottom portion 52 that is elongated and longer than the bottom portion 42 of the first intermediate formed body 40, side wall portions 53 that include portions of the bottom portion 52 having a smaller radius of curvature and are higher than the side wall portions 43 of the first intermediate formed body 40, and side wall portions 54 that include portions of the bottom portion 52 having a large radius of curvature and are higher than the side wall portions 44 of the first intermediate formed body 40, as illustrated in FIG. 3. Further, the second intermediate formed body 50 is drawn or drawn and ironed to make the side wall portion 13 with a predetermined thickness and to give gloss to a surface thereof, and further, by trimming the open end thereof, the bottomed can 10 illustrated in FIG. 4 is obtained to be a final formed product. The recessed portion 37 formed in the blank 33 changes in thickness and shape according to the processing steps, and becomes flat and disappears in the final formed bottomed can 10.

As a specific method of drawing, or drawing and ironing, a common processing method using a punch and a die can be employed.

In the above embodiment, the blank 33 is punched and drawn, and then the intermediate formed product is drawn and ironed twice. However, the number of times of drawing and ironing may be appropriately set according to a shape and dimensions of a bottomed can 10, which is the final formed product. Therefore, the blank 33 may be drawn and ironed only once. The intermediate formed product may be drawn and ironed three or more times. This also includes a case of drawing without ironing, a case of re-drawing after the drawing, and a case of stretching during the re-drawing. The present invention also includes a case of drawing without ironing one or more times in an initial processing step, and then drawing and ironing or ironing one or more times. Of course, the present invention also includes a case of drawing or ironing in a middle of multiple times of drawing and ironing.

### Intermediate Material for Manufacturing Bottomed Cans

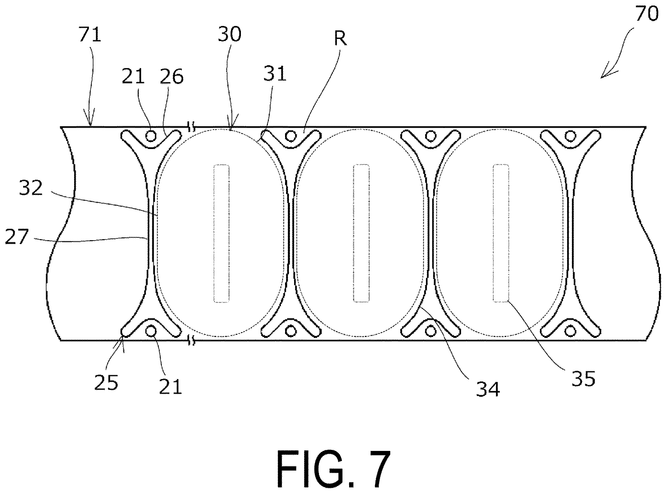

FIG. 7 is a plan view illustrating an example of an intermediate material for manufacturing bottomed cans according to the present invention.

In an intermediate material 70 for manufacturing bottomed cans according to the present invention, multiple bottomed cans 10 can be manufactured from one strip-shaped intermediate material 70, the above piercing step is continuously performed on a raw plate 71 for manufacturing bottomed cans having a strip shape and made of metal between the areas 30 to be blank, and the bottomed cans 10 can be manufactured by subjecting the intermediate material 70 to conveying steps including a coining step and a subsequent step along the conveyance path of the strip raw plate 20 as in the above embodiment.

The intermediate material 70 for manufacturing bottomed cans is a strip-shaped metal plate in which positioning holes 21 and material flow buffering holes 25 are pierced at predetermined distances so as to be located between the areas 30 to be blank, respectively. In the intermediate material 70, the positioning holes 21 and the material flow buffering holes 25 are formed at the same positions as in the above embodiment. That is, the multiple areas 30 to be blank are arranged in a line in a conveyance direction (right-left direction in FIG. 7), and the positioning holes 21 are pierced at positions outside the areas 30 to be blank and close to both edges of both end portions (upper end portion and lower end portion in FIG. 7) of the strip raw plate 20 in a width direction within substantially V-shaped areas R formed between elliptical top portions 31 of the adjacent areas 30 to be blank. The material flow buffering hole 25 is pierced between the areas 30 to be blank and between the positioning holes 21 and the areas 30 to be blank at a position that does not interfere with the areas 30 to be blank on the right and left sides and the positioning holes 21 on the upper and lower sides. The material flow buffering hole 25 is formed in a shape that follows the areas 30 to be blank and the positioning holes 21. To be specific, the material flow buffering hole 25 has a substantially X-shape including the V-shaped portions 26 that lie between the areas 30 to be blank and the positioning holes 21 and open outward in the width direction so as to surround the positioning holes 21, and the I-shaped portion 27 that lies between the areas 30 to be blank and connects both the V-shaped portions 26. The entire positioning hole 21 is located within a triangular area surrounded by a straight line connecting apexes of the V-shaped portion 26 and the V-shaped portion 26. The area 30 to be blank is surrounded by the material flow buffering holes 25 except for both end portions of the elliptical top portions 31 in the width direction.

The material flow buffering hole 25 is not in direct contact with the areas 30 to be blank, and edge portions having slight widths are interposed between the material flow buffering hole 25 and the areas 30 to be blank. That is, a blank portion 34 having a shape slightly larger than the area 30 to be blank in which an entire periphery of the area 30 to be blank is surrounded by the edge portion is placed in a state in which only the end portions in the width direction are integrally continuous with the strip raw plate 20 and a portion corresponding to the body portion 32 is separated from an adjacent blank portion 34.

An embodiment of the present invention has been described in detail above, but the present invention is not limited to the embodiment described above, and various design changes can be made without departing from the present invention described in the claims.

For example, in the present embodiment, the rectangular can is used as an example of the bottomed can. However, the bottomed can to which the manufacturing method according to the present invention is applied is not limited to the rectangular can. The manufacturing method according to the present invention can be widely applied to bottomed cylindrical cans, such as polygonal cans other than the bottomed rectangular cylindrical cans, and circular and elliptical round cans.

For example, of the bottomed can, a size relationship between the long side portion, the short side portion, and the like, and a size relationship between the thickness of the side wall portion and the thickness of the bottom portion are not limited.

### Reference Signs List

10 Bottomed can
12 Bottom portion
13 Side wall portion
14 Long side portion
15 Short side portion
20 Strip raw plate
21 Positioning hole
25 Material flow buffering hole
26 V-shaped portion
27 I-shaped portion
30 Area to be blank
31 Elliptical top portion
32 Body portion
33 Blank
34 Blank portion
35 Area to be bottom
37 Recessed portion
40 First intermediate formed body
42 Bottom portion
43 Side wall portion
44 Side wall portion
50 Second intermediate formed body
52 Bottom portion
53 Side wall portion
54 Side wall portion
60 Coining machine
61 Coining punch
62 Coining die
63 Metal plate holding member
64 Through hole
70 Intermediate material
71 Raw plate for manufacturing bottomed can
R Substantially V-shaped area

## Claims

1. A method for manufacturing multiple bottomed cans from a raw plate made of metal, the method comprising:
coining at least part of an area to be blank that becomes a blank in the raw plate;
punching and obtaining a blank from the raw plate and drawing and forming the blank obtained into a bottomed can shape, sequentially in this order; and
before the coining, piercing a material flow buffering hole to form a buffering hole between the area to be blank and another area to be blank in the raw plate.

2. The method according to claim 1, comprising:
before the coining, forming at least one positioning portion, wherein
the at least one positioning portion is formed at a position outside the area to be blank in the raw plate, and the material flow buffering hole is interposed between the at least one positioning portion and the area to be blank.

3. The method according to claim 2, wherein
the at least one positioning portion is a positioning hole passing through the raw plate.

4. The method according to claim 2, wherein
the area to be blank has an elliptical shape elongated in a width direction of the raw plate, and
the at least one positioning portion includes two positioning portions, and the two positioning portions are formed symmetrically at both end portions of the raw plate in the width direction between the areas to be blank adjacent to each other.

5. The method according to claim 1, wherein
the material flow buffering hole has a rectangular or elliptical shape extending in a width direction of the raw plate.

6. The method according to claim 4, wherein
the material flow buffering hole has a substantially X-shape formed of two V-shaped portions surrounding the two positioning portions and an I-shaped portion connecting the two V-shaped portions.

7. The method according to claim 6, wherein
each of the two positioning portions is located within a triangular area formed by a straight line connecting apexes of each of the two V-shaped portions of the material flow buffering hole and each of the two V-shaped portions.

8. The method according to claim 2, wherein
the forming at least one positioning portion and the piercing a material flow buffering hole are performed simultaneously.

9. The method according to claim 1, wherein
the coining is performed along an outer peripheral edge of an area to be bottom that becomes a bottom portion of each of the multiple bottomed cans.

10. The method according to claim 1, wherein
the multiple bottomed cans are rectangular cans.

11. An intermediate material for manufacturing bottomed cans made of metal from which blanks for manufacturing a plurality of bottomed cans are punched, wherein
a material flow buffering hole is provided between areas to be blank in the intermediate material for manufacturing bottomed cans.

12. The intermediate material according to claim 11, wherein
a positioning portion is provided outside the areas to be blank in the intermediate material for manufacturing bottomed cans, and
the material flow buffering hole is interposed between the positioning portion formed and the areas to be blank.

13. The intermediate material according to claim 12, wherein
the positioning portion is a positioning hole passing through the raw plate.
